# EUROPEAN PATENT APPLICATION

(11) **EP 3 318 514 A1**
(43) Date of publication of application: **09.05.2018**
(21) Application number: 17191673.7
(22) Date of filing: 18.09.2017
(51) Int. Cl.: B65G 15/14, B65B 35/24

(54) **METHOD FOR MOVING PRODUCTS PACKAGED IN A TUBULAR FILM**

(30) Priority: 16.09.2016 NL 2017481
(71) Applicant: B.A.T. Holding B.V., 4903 RE Oosterhout (NL)
(72) Inventor: Broekhoven, Sergius Arnoldes Johannes, 4903 RE Oosterhout (NL)
(74) Representative: Verhees, Godefridus Josephus Maria

(57) **Abstract**

In a method for moving products 3 which are packaged in a tubular foil 5, the ends 7 and 8 of which are squeezed flat over the entire width and sealed tightly to strips 9 and 10, the products being between two parallel and spaced apart present parts of two endless conveying elements 11 are pushed by drivers 23 present on the conveying elements 11, the drivers 23 abutting the rear bend the edges 9B of the strips 9 in the direction of displacement 6.

## Description

### Technical filed of the invention

The invention relates to a method for moving products packaged in a tubular film whose ends are flattened over the entire width and sealed to strips with greater rigidity than the tubular intermediate part, in which method the products are carried along between two parallel and spaced-apart parts of two endless transport elements by drivers present on the outwardly directed sides of the endless transport elements, which drivers carry the products during movement of the transport elements, wherein the drivers on the said two parallel parts of the endless transport elements are straight opposite one another.

### Background of the invention

Such a method is known from EP 2 586 715 A. In this known method the drivers present on the endless conveyor elements press against the sealed strips of the package in the direction of movement and thus take the packaged products along with the moving endless transport elements.

### Summary of the invention

An object of the invention is to provide a method of the type described in the preamble in which the packaged products can be transported better than with the known method. For this purpose, the method according to the invention is characterized in that the products between the two sealed strips are carried along by the drivers, which drivers push against the rear edge of the, in the direction of movement, front strip. The products are thus pulled along by the drivers instead of pushed forward as is the case with the known method. When pulling, there is less chance of jamming than when pushing products and the products are less heavily loaded.

An embodiment of the method according to the invention is characterized in that, the drivers present on the endless conveyor elements two further carriers which are directly opposite one another are present against the front edge of the rear strip and hold the product in position with respect to the endless transport elements.

### Brief description of the drawings

In the following the invention will be explained in more detail with reference to an embodiment of a transport system shown in the drawings for carrying out the method according to the invention. This shows:
Figure 1 shows a top view of an embodiment of the transport system according to the invention;
Figure 2 shows the transport system in perspective;
Figure 3 shows a detail of the transport system in plan view; and
Figure 4 the detail in perspective.

### Detailed description of the drawings

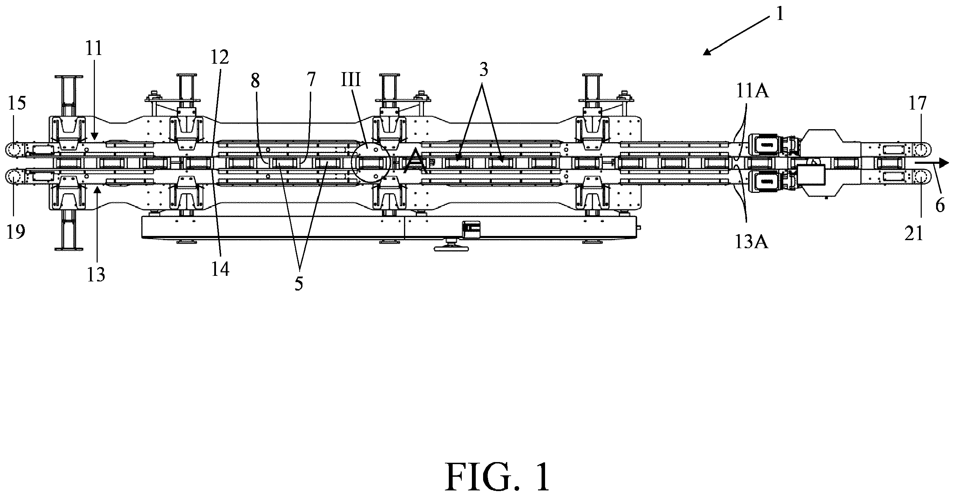

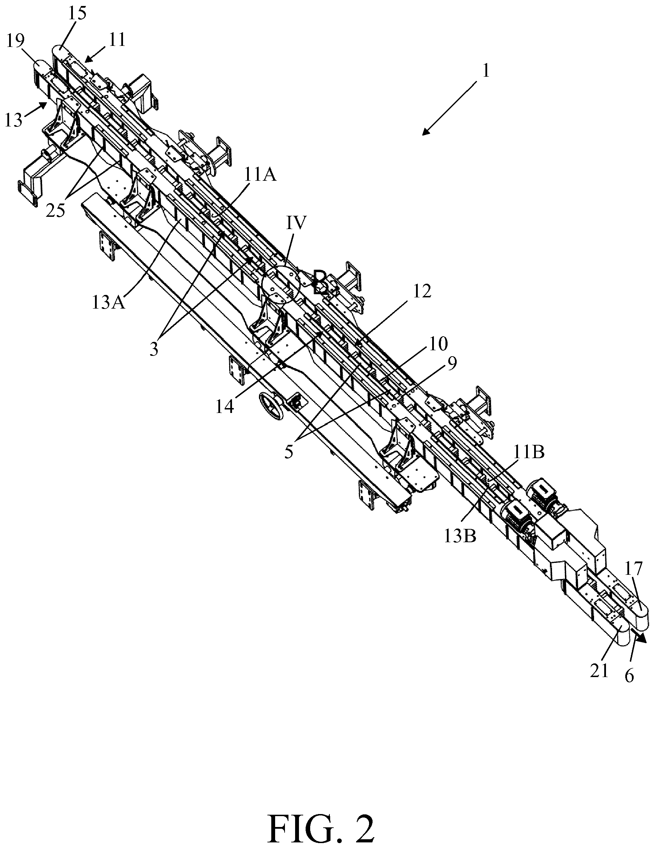

In figures 1 and 2 an embodiment of the transport system 1 according to the invention is shown in top view and in perspective respectively. The transport system 1 is suitable for transporting products which are packaged in a package 3 formed by a tubular foil 5. Parts of the foil extending over a distance from the ends 7 and 8 are squeezed flat over the entire width and are tightly sealed to form strips 9 and 10 with increased stiffness. The transport system 1 has two endless transport elements which are formed by conveyor belts 11 and 13, which are each wrapped around at least two diverting rollers 15 and 17 and 19 and 21, respectively. Parts 12 and 14 of both conveyor belts 11 and 13 between the diverting rollers are parallel to each other and spaced apart.

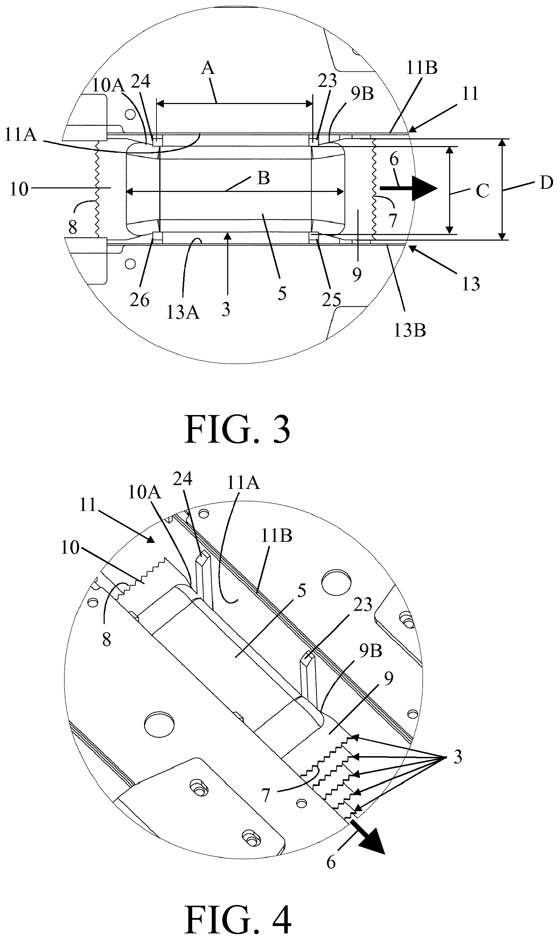

The conveyor belts 11 and 13 are provided with drivers 23-26 which are present at a distance from each other and which are formed by ridges which are parallel to each other and to the diverting rollers 15-21 and which are present on the outwardly facing sides 11A and 13A of the conveyor belts 11 and 13. In this embodiment the ridges 23-26 have a rectangular cross-section, see Figs. 3 and 4, in which figures the details III and IV indicated in Figs. 1 and 2 are shown in top view and in perspective respectively.

The distance A between two adjacent ridges 23 and 24 (and 25 and 26) is equal to or smaller than the distance B between the strips 9 and 10 of the package 3. Furthermore, the distance C between two ridges 23 and 25 (and 24 and 26) straight opposite each other is smaller than the width D of the strips 9 and 10 of the package 3. As a result, the ridges 23 and 25 push against the rear edges 9B of the, in conveying direction 6, rigid front strips 9 and the ridges 24 and 26 are present against the front edges 10A of the, in the conveying direction 6, rear strips 10 and thus keep the rear strips 10 at distance from the front ridges 23 and 25 so that the packaged products 3 cannot shift relative to the conveyor belts 11 and 13 and can be moved in a good and controlled manner.

Although the present invention is elucidated above on the basis of the given drawings, it should be noted that this invention is not limited whatsoever to the embodiments shown in the drawings. The invention also extends to all embodiments deviating from the embodiments shown in the drawings within the context defined by the claims.

## Claims

1. A method for moving products (3) packaged in a tubular film (5) whose ends (7, 8) are flattened over the entire width and sealed to strips (9, 10) with greater rigidity than the tubular intermediate part, in which method the products are carried along between two parallel and spaced-apart parts (12, 14) of two endless transport elements (11, 13) by drivers (23, 25) present on the outwardly directed sides (11A, 13A) of the endless transport elements, which drivers carry the products during movement of the transport elements, wherein the drivers on the said two parallel parts of the endless transport elements are straight opposite one another, **characterized in that** the products (3) between the two sealed strips (9, 10) are carried along by the drivers (23, 25), which drivers push against the rear edge (9B) of the, in the direction of movement (6), front strip (9).

2. Method according to claim 1, **characterized in that** of the drivers present on the endless conveyor elements (11, 13) two further carriers (24, 26) which are directly opposite one another are present against the front edge (10A) of the rear strip (10) and hold the product (3) in position with respect to the endless transport elements (11,13).
